# EUROPEAN PATENT APPLICATION

(11) **EP 3 869 735 A1**
(43) Date of publication of application: **25.08.2021**
(21) Application number: 18938098.3
(22) Date of filing: 02.11.2018
(51) Int. Cl.: H04L 12/24

(54) **VIRTUAL IP PORT CONFIGURATION METHOD AND APPARATUS**

(30) Priority: 23.10.2018 CN 201811237824
(71) Applicant: Wangsu Science & Technology Co., Ltd., Shanghai 201800 (CN)
(72) Inventor: SUN, Yunyun, Shanghai 201800 (CN); CHEN, Shifa, Shanghai 201800 (CN)
(74) Representative: De Arpe Tejero, Manuel
(86) International application number: PCT/CN2018/113735
(87) International publication number: WO 2020/082416

(57) **Abstract**

The present disclosure discloses a method and an apparatus for configuring ports of virtual IP. The method includes: after receiving port configuration information sent by the administrator, the management platform may generate a configuration code according to the port configuration information and a configuration code generation template, such that the server to be configured can be configured according to the configuration code. By adopting the method described above, during the entire process of configuring the port of virtual IP, the administrator only needs to maintain the port configuration information, the management platform can automatically generate the configuration code, and there is no need for a developer to manually modify the code, which simplifies the operation of port configuration and greatly improves the efficiency of port configuration. Further, during the process of generating configuration code, the configuration code generation template can be incorporated into the generation of the configuration code, thereby ensuring the accuracy of the generated configuration code.

## Description

### FIELD OF THE DISCLOSURE

The present disclosure relates to the field of internet technology and, more particularly, relates to a method and an apparatus for configuring ports of virtual IP.

### BACKGROUND

For a large network system, such as Linux virtual server (LVS) cluster, the configuration parameters of the virtual internet protocol (IP) ports of different servers in the LVS cluster need to be configured according to the server type and the application service type. In existing technology, when configuring a port of virtual IP, the configuration parameters of the port are often manually maintained by an administrator, and then a developer adjusts the configuration code of the port of virtual IP according to the configuration parameters such that the configuration code may be further deployed to the corresponding server. Therefore, the process for configuring the port of virtual IP is complicated, and the developer needs to repeatedly modify the code, which is a heavy workload for the developer.

As such, currently, there is a need for a method for configuring ports of virtual IP to solve the problems due to the complicated process for configuring ports of virtual IP in existing technology and heavy workload for developers.

### BRIEF SUMMARY OF THE DISCLOSURE

The embodiments of the present disclosure provide a method and an apparatus for configuring ports of virtual IP in order to solve the technical problem that the process for configuring ports of virtual IP in the existing technology is complicated and the workload for the developer is heavy.

The embodiments of the present disclosure provide a method for configuring ports of virtual IP, and the method includes:
receiving port configuration information, where the port configuration information includes attribute information of the server to be configured and configuration parameters to be configured, and the format of the port configuration information is consistent with a preset configuration code generation template; and
generating a configuration code according to the port configuration information and the configuration code generation template, where the configuration code is used to be provided to the server to be configured, such that the server to be configured is configured according to the configuration code.

By adopting the method described above, during the entire process of configuring the port of virtual IP, the administrator only needs to maintain the port configuration information, the management platform can automatically generate the configuration code, and there is no need for a developer to manually modify the code, which simplifies the operation of port configuration and greatly improves the efficiency of port configuration. Further, during the process of generating configuration code, the configuration code generation template can be incorporated into the generation of the configuration code, thereby ensuring the accuracy of the generated configuration code.

In a possible implementation manner, the configuration code includes indication information for representing the attribute information; and
after generating the configuration code, the method further includes:
receiving a configuration request sent by the server, where the configuration request includes the attribute information of the server;
determining a target configuration code, according to the attribute information of the server and the indication information of each of a plurality of stored configuration codes; and
sending the target configuration code to the server, such that the server is configured according to the target configuration code.

As such, the server is able to timely obtain the corresponding configuration code from the management platform and perform configuration, thereby improving the timeliness of port configuration.

In a possible implementation manner, prior to generating the configuration code, the method further includes:
determining that a historical configuration code corresponding to the server to be configured is not stored;
or
when the attribute information includes a priority level, determining that the priority level of a historical configuration code is not the same as the priority level of the attribute information.

According to the embodiments of the present disclosure, the management platform is able to verify the port configuration information, which can effectively avoid configuration conflict or error in the port configuration information, thereby ensuring the accuracy of the generated configuration code. Further, the administrator may be able to fill in the port configuration information regularly, which improves the standardization of the port configuration information, such that the method provided by the embodiments of the present disclosure has a wide application scope and also facilitates subsequent maintenance.

In a possible implementation manner, after generating the configuration code, the method further includes:
when the server to be configured is determined to be a server that has been in service, sending a configuration notification to the server to be configured, where the configuration notification is used to notify the server to be configured to acquire the configuration code.

As such, for a server that has been in service, the embodiments of the present disclosure can timely notify the server that has been in service to modify the port configuration, thereby improving the timeliness of the modification of port configuration.

In a possible implementation manner, the configuration code generation template includes a server type, a server application service type, a server application service type group, a network protocol, a port number, whether or not persistently connect, a persistent connection time, a client granularity, a scheduling mode, a detection mode, whether or not fallback, a real sever (RS) weight value, and an IP type.

In a possible implementation manner, the method further includes:
acquiring operation data of the server under the current configuration code; and
according to the operation data, when determining that the server does not meet preset service requirements and a candidate configuration code corresponding to the server exists, notifying the server to replace the current configuration code.

By adopting the method described above, the purpose of monitoring the service quality of the server is achieved, and the service quality of the server is ensured. Further, even when the service quality of the server is found to be problematic, the management platform can take corresponding measures in time to optimize the service quality of the server.

In a possible implementation manner, the operation data includes an amount of requests received within a preset period and a response speed after receiving a request; and
according to the operation data, determining that the server does not meet the preset service requirements includes:
determining the service quality of the server according to the amount of requests received in the preset period and the response speed after the server receives the request; and
determining that the service quality is lower than a preset service quality.

In a possible implementation manner, the operation data includes a protocol corresponding to the received request, a port corresponding to the received request, and a connection status corresponding to the received request; and
according to the operation data, determining that the server does not meet the preset service requirements includes:
determining that any one of the protocol corresponding to the request received by the server, the port corresponding to the request received by the server, and the connection status corresponding to the request received by the server does not meet the configuration requirements of the server under the current configuration code.

In a possible implementation manner, the method further includes:
when determining that the candidate configuration code corresponding to the server does not exist, sending a notification for modification, where the notification for modification is used to notify the server to modify the current configuration code.

The embodiments of the present disclosure provide a method for configuring ports of virtual IP, applied to a server, and the method includes:
sending a configuration request, where the configuration request includes the attribute information of the server;
receiving at least one configuration code, where the configuration code is determined according to the attribute information of the server and the indication information of each of a plurality of stored configuration codes, and the indication information is used to represent the attribute information of a server to which the configuration code is applicable; and
performing configuration according to the at least one configuration code.

In a possible implementation manner, the performing configuration according to the at least one configuration code includes:
parsing each configuration code separately, and obtaining priority information corresponding to each configuration code;
determining a configuration code with the highest priority level according to the priority information corresponding to each configuration code; and
performing configuration according to the configuration code with the highest priority level.

In a possible implementation manner, prior to sending the configuration request, the method further includes:
receiving a configuration notification, where the configuration notification is used to notify the server to acquire the configuration code, and the configuration notification is sent after determining that the server is a server that has been in service.

In a possible implementation manner, the method further includes:
receiving a notification for configuration modification, where the notification for configuration modification is used to notify the server to replace the current configuration code, and the notification for configuration modification is sent after determining that the server does not meet the preset service requirements and a candidate configuration code corresponding to the server exists; and
replacing the current configuration code.

The embodiments of the present disclosure provide an apparatus for configuring ports of virtual IP, and the apparatus includes:
a receiving unit, configured to receive port configuration information, where the port configuration information includes attribute information of the server to be configured and configuration parameters to be configured, and the format of the port configuration information is consistent with a preset configuration code generation template; and
a processing unit, configured to generate a configuration code according to the port configuration information and the configuration code generation template, where the configuration code is used to be provided to the server to be configured, such that the server to be configured is configured according to the configuration code.

In a possible implementation manner, the configuration code includes indication information for representing the attribute information;
after the processing unit generates a configuration code, the receiving unit is further configured to:
receive a configuration request sent by the server, where the configuration request includes attribute information of the server;
the processing unit is further configured to:
determine a target configuration code according to the attribute information of the server and the indication information of each of a plurality of stored configuration codes; and
the apparatus further includes:
a transmitting unit, configured to send the target configuration code to the server, such that the server is configured according to the target configuration code.

In a possible implementation manner, prior to generating the configuration code, the processing unit is further configured to:
determine that the historical configuration code corresponding to the server to be configured is not stored;
or
when the attribute information includes a priority level, determine that the priority level of a historical configuration code is not the same as the priority level of the attribute information.

In a possible implementation manner, after the processing unit generating the configuration code, the apparatus is further configured to:
when the server to be configured is determined to be a server that has been in service, send a configuration notification to the server to be configured through the transmitting unit, where the configuration notification is used to notify the server to be configured to acquire the configuration code.

In a possible implementation manner, the configuration code generation template includes a server type, a server application service type, a server application service type group, a network protocol, a port number, whether or not persistently connect, a persistent connection time, a client granularity, a scheduling mode, a detection mode, whether or not fallback, an RS weight value, and an IP type.

In a possible implementation manner, the receiving unit is further configured to:
acquire operation data of the server under the current configuration code; and
the processing unit is further configured to:

according to the operation data, when determining that the server does not meet preset service requirements and a candidate configuration code corresponding to the server exists, notify the server to replace the current configuration code.

In a possible implementation manner, the operation data includes an amount of requests received within a preset period and a response speed after receiving a request; and
the processing unit is specifically configured to:
determine the service quality of the server according to the amount of requests received in the preset period and the response speed after the server receives the request; and
determine that the service quality is lower than a preset service quality.

In a possible implementation manner, the operation data includes a protocol corresponding to the received request, a port corresponding to the received request, and a connection status corresponding to the received request; and
the processing unit is specifically configured to:
determine that any one of the protocol corresponding to the request received by the server, the port corresponding to the request received by the server, and the connection status corresponding to the request received by the server does not meet the configuration requirements of the server under the current configuration code.

In a possible implementation manner, the processing unit is further configured to:
when determining that the candidate configuration code corresponding to the server does not exist, send a notification for modification through the transmitting unit, where the notification for modification is used to notify the server to modify the current configuration code.

The embodiments of the present disclosure provide an apparatus for configuring ports of virtual IP, applied to a server, and the apparatus includes:
a transmitting unit, configured to send a configuration request, where the configuration request includes attribute information of the server;
a receiving unit, configured to receive at least one configuration code, where the configuration code is determined according to the attribute information of the server and the indication information of each of a plurality of stored configuration codes, and the indication information is used to represent the attribute information of a server to which the configuration code is applicable; and
a processing unit, configured to perform configuration according to the at least one configuration code.

In a possible implementation manner, the processing unit is specifically configured to:
parse each configuration code separately, and obtain priority information corresponding to each configuration code; determine a configuration code with the highest priority level according to the priority information corresponding to each configuration code; and perform configuration according to the configuration code with the highest priority level.

In a possible implementation manner, prior to the transmitting unit sending the configuration request, the receiving unit is further configured to:
receive a configuration notification, where the configuration notification is used to notify the server to acquire the configuration code, and the configuration notification is sent after determining that the server is a server that has been in service.

In a possible implementation manner, the receiving unit is further configured to:
receive a notification for configuration modification, where the notification for configuration modification is used to notify the server to replace the current configuration code, and the notification for configuration modification is sent after determining that the server does not meet the preset service requirements and a candidate configuration code corresponding to the server exists; and
the processing unit is further configured to:
replace the current configuration code.

The embodiments of the present disclosure further provides an apparatus, and the apparatus has the function of implementing the method for configuring ports of virtual IP described above. The function may be implemented through hardware executing the corresponding software. In a possible design, the apparatus includes: a processor, a transceiver, and a memory. The memory is used to store computer-executable instructions, the transceiver is configured to implement the communication between the apparatus and other communication entities, and the processor is coupled to the memory through a bus. When the apparatus is operating, the processor executes the computer-executable instructions stored by the memory, such that the apparatus can perform the method for configuring ports of virtual IP described above.

The embodiments of the present disclosure further provide a computer storage medium, and the storage medium stores a software program. When the software program is read and executed by one or multiple processors, the method for configuring ports of virtual IP illustrated in the various possible implementations described above can be implemented.

The embodiments of the present disclosure further provide an instruction-containing computer program product, and when the instruction-containing computer program product is executed on a computer, the computer performs the method for configuring ports of virtual IP illustrated in the various possible implementations described above.

### BRIEF DESCRIPTION OF THE DRAWINGS

In order to more clearly illustrate the technical schemes in the embodiments of the present disclosure, the drawings used in the description of the embodiments will be briefly described below.
FIG. 1 illustrates a schematic diagram of a system architecture applicable to an embodiment of the present disclosure;
FIG. 2 illustrates a flowchart of a method for configuring ports of virtual IP according to an embodiment of the present disclosure;
FIG. 3 illustrates a schematic diagram of filling in configuration parameters in an embodiment of the present disclosure;
FIG. 4 illustrates a schematic overall flowchart of a method for configuring ports of virtual IP according to an embodiment of the present disclosure;
FIG. 5 illustrates a schematic flowchart of a method for configuring ports of virtual IP on a server side according to an embodiment of the present disclosure;
FIG. 6 illustrates a schematic overall flowchart of a method for configuring ports of virtual IP on a server side according to an embodiment of the present disclosure;
FIG. 7 illustrates a schematic flowchart of a quality monitoring method after configuration according to an embodiment of the present disclosure;
FIG. 8 illustrates a schematic diagram of an overall process of a quality monitoring method after server configuration according to an embodiment of the present disclosure;
FIG. 9 illustrates a schematic structural diagram of an apparatus for configuring ports of virtual IP according to an embodiment of the present disclosure; and
FIG. 10 illustrates a schematic structural diagram of another apparatus for configuring ports of virtual IP according to an embodiment of the present disclosure.

### DETAILED DESCRIPTION

In the following, the present application will be specifically described with reference to the accompanying drawings, and the specific operation method in the method embodiments can also be applied to the device embodiments.

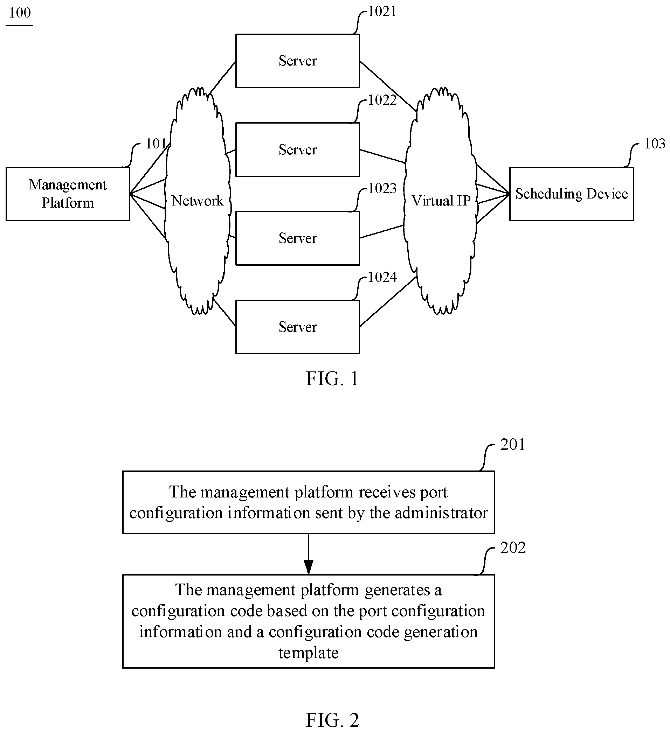

FIG. 1 illustrates a schematic diagram of a system architecture applicable to an embodiment of the present disclosure. As shown in FIG. 1, the system 100 may include a management platform 101, at least one server (such as a server 1021, a server 1022, a server 1023, and the server 1024 as shown in FIG. 1), and a scheduling device 103. In the system 100, the management platform 101 may be connected to each server through a network. For example, the management platform 101 shown in FIG. 1 may be connected to the server 1021 through a network, may be connected to the server 1022 through a network, may be connected to the server 1023 through a network, or may be connected to the server 1024 through a network. The scheduling device 103 may be connected to each server through a virtual IP, thereby realizing load balance. For example, the scheduling device 103 shown in FIG. 1 may be connected to the server 1021 through a network, may be connected to the server 1022 through a network, may be connected to the server 1023 through a network, or may be connected to the server 1024 through a network.

In the embodiments of the present disclosure, the system shown in FIG. 1 may be applied to an LVS cluster. Generally, an LVS cluster may adopt an IP load balancing technology and a content-request based distribution technology. That is, the scheduling device 103 shown in FIG. 1 may be a load scheduler in an LVS cluster.

Based on the system architecture shown in FIG. 1, FIG. 2 illustrates a flowchart of a method for configuring ports of virtual IP provided by an embodiment of the present disclosure. The method may include the following steps.

In step 201, the management platform may receive port configuration information sent by the administrator.

In step 202, the management platform may generate a configuration code based on the port configuration information and a configuration code generation template.

By adopting the method described above, during the entire process of configuring the port of virtual IP, the administrator only needs to maintain the port configuration information, the management platform can automatically generate the configuration code, and there is no need for a developer to manually modify the code, which simplifies the operation of port configuration and greatly improves the efficiency of port configuration. Further, during the process of generating configuration code, the configuration code generation template can be incorporated into the generation of the configuration code, thereby ensuring the accuracy of the generated configuration code.

Specifically, in step 201, the port configuration information may include various types of content. For example, the port configuration information may include the attribute information of the server to be configured, the configuration parameters to be configured, etc. The present disclosure is not limited to any specific manner.

The attribute information of the server to be configured may include the type of the server to be configured, the application service type of the server to be configured, the application service type group of the server to be configured, etc. may further include the type of the server to be configured that is excluded, the application service type of the server to be configured that is excluded, etc., and may also include a priority level. The present disclosure is not limited to any specific manner.

By introducing the concept of priority level in the attribute information, it may be possible to avoid the problem that the server cannot make a selection when two or more configuration codes of the same server appear, thereby preventing the configuration anomaly of the server.

Further, the type of the server to be configured may be different according to the division method. For example, according to the processor architecture of the server (that is, the instruction system used by the CPU of the server), the type of the server to be configured may include a complex instruction set computing (CISC) architecture server type, a reduced instruction set computing (RISC) architecture server type, a very long instruction work (VLIW) architecture server type, etc.; for another example, according to the external structure, the type of the server to be configured may include a tower server, a rack server, a blade server, etc. The present disclosure is not limited to any specific manner. The application service type of the server to be configured may include a file application service, a database application service, an application service, a WEB application service, etc.

The configuration parameters to be configured may refer to configuration parameters used for configuring ports of virtual IP. Specifically, the configuration parameters to be configured may include a network protocol, a port number, whether or not persistently connect, a persistent connection time, a client granularity, a scheduling mode, a detection mode, whether or not fallback, an RS weight value, an IP type, etc.

Further, the format of the port configuration information may be consistent with the configuration code generation template of the management platform. That is, the configuration code generation template may include a server type, a server application service type, a server application service group type, a network protocol, a portion number, whether or not persistently connect, a persistent connection time, a client granularity, a scheduling mode, a detection mode, whether or not fallback, an RS weight value, an IP type, etc. As such, it is convenient for the management platform to generate configuration code.

In order to facilitate the administrator to fill in the port configuration information, in the embodiments of the present disclosure, the port configuration information can be expressed in the form of a table. As shown in Table 1, an example of illustrating port configuration information in the form of a table is presented. For the details, reference may be made to the content shown in Table 1, which will not be described in detail here.

**Table 1: an example of illustrating port configuration information in the form of a table**

| | | | | | | | | | |
|---|---|---|---|---|---|---|---|---|---|
| Begin | | | | | | | | | |
| Application service type: | | | | | | | | | |
| Application service type group: | | | | | | | | | |
| Server type: | | | | | | | | | |
| Type of the server being excluded: | | | | | | | | | |
| Application service type of the server being excluded: | | | | | | | | | |
| Priority level: | | | | | | | | | |
| Protocol | Port | Persistent connection | Persistent connection time | Client granularity | Scheduling mode | Detection mode | Whether fallback | RS weight | IP type |
| | | | | | | | | | |
| | | | | | | | | | |
| End | | | | | | | | | |

According to the content shown in Table 1, among "application service type", "application service type group", "server type", "type of the server being excluded", and "application service type of the server being excluded", multiple conditions can be filled in the same line, and the relationship between the multiple conditions may be a logical "or" relationship, while the relationship between different rows may be a logical "and" relationship. Due to different port configuration information of the servers, through these conditions, the server to be configured may be accurately located.

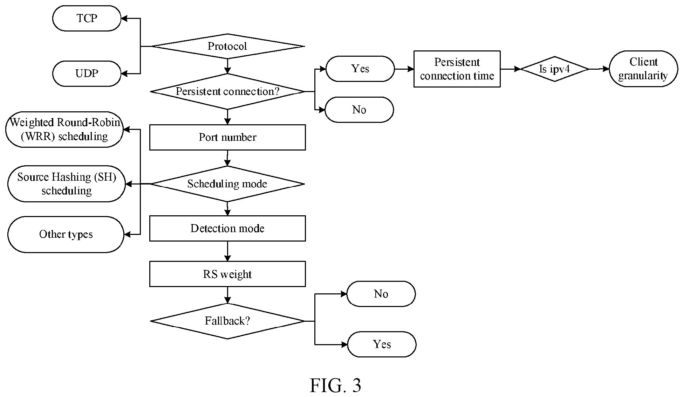

Further, the content to be filled in the blank cells shown in Table 1 may be filled in according to the content shown in FIG. 3. FIG. 3 illustrates a schematic diagram of filling in configuration parameters in an embodiment of the present disclosure. In the figure, the diamond selection boxes may be optional items. The optional items may be extended accordingly, and may be the content that can be filled in. For non-diamond selection boxes, for example, the port number, may need the administrator to manually input. For example, the port number can be selected between 0 and 65535. When the content is filled in according to the content shown in FIG. 3, the situation of filling error may be effectively avoided, and thus the probability of having configuration code generation errors may be reduced, thereby reducing the adverse effect on the server. Further, the administrator may be able to fill in the port configuration information regularly, which improves the standardization of the port configuration information, such that the method provided by the embodiments of the present disclosure has a wide application scope and also facilitates subsequent maintenance.

Considering that the port configuration information is provided by the administrator, incorrect filling of the port configuration information may easily occur. Therefore, prior to performing the above step 202, the embodiments of the present disclosure may include verifying the port configuration information generated by the administrator.

Specifically, verifying the port configuration information may have various ways. A possible implementation manner is that the management platform may determine whether a server to be configured exists according to the attribute information. When a server to be configured exists, the above step 202 may be performed; otherwise, the administrator may be informed that the port configuration information is filled incorrectly, such that the administrator can modify the port configuration information.

Further, using the port configuration information shown in Table 1 as an example for illustration, when determining whether a server to be configured exists, the management platform may determine whether the type of the server to be configured, the application service type of the server to be configured, the application service type group of the server to be configured, the type of the server to be configured that is excluded, and the application service type of the server to be configured that is excluded are contradictory. When there is a contradiction, the management platform may determine that the server to be configured does not exist; otherwise, the management platform may determine that the server to be configured exists. For example, when the type of the server to be configured is a CISC architecture server type, and the type of the server to be configured that is excluded is also a CISC architecture server type, it may be determined that a contradiction occurs. In another example, when the type of the server to be configured is a CISC architecture server type, the application service type of the server to be configured is a WEB application service type, and all servers corresponding to the WEB application service type are not CISC architecture servers, it may be determined that a contradiction occurs.

Alternatively, using the port configuration information shown in Table 1 as an example for illustration, when determining whether a server to be configured exists, the management platform may determine whether any one of the type of the server to be configured, the application service type of the server to be configured, the application service type group of the server to be configured, the type of the server to be configured that is excluded, and the application service type of the server to be configured that is excluded contradicts the server set by the system. When there is a contradiction, the management platform may determine that the server to be configured does not exist; otherwise, the management platform may determine that the server to be configured exists. For example, when the type of the server to be configured is a CISC architecture server type, and the server set by the system does not include a CISC architecture server, it may be determined that a contradiction occurs. In another example, when the application service type of the server to be configured is a WEB application service type, and the server set by the system does not include a server corresponding to Web application services, it may be determined that a contradiction occurs.

Another possible implementation manner is that the management platform may determine, according to the attribute information, whether the historical configuration code corresponding to the server to be configured is stored. When the historical configuration code corresponding to the server to be configured is stored, the above step 202 may be performed; otherwise, whether the priority level of the historical configuration code is the same as the priority level of the attribute information may be further determined. When the priority level is not the same, the above step 202 may be performed. When the priority level is the same, the administrator may be informed that the port configuration information is incorrectly filled out, such that the administrator may be able to modify the port configuration information.

In other possible implementation manners, the management platform may first determine whether a server to be configured exists according to the attribute information, and then determine whether the historical configuration code corresponding to the server to be configured is stored. Further, when the historical configuration code is stored, whether the priority level of the historical configuration code is the same as the priority level of the attribute information may be determined. The present disclosure is not limited to any specific manner. It should be noted that after determining that the priority level of the historical configuration code is not the same as the priority level of the attribute information, the management platform may also inform the administrator of the situation, such that the administrator may further confirm the situation, and thus ensure that the port configuration information generated by the administrator is correct.

In the embodiments of the present disclosure, the management platform may be able to verify the port configuration information, and thus may effectively avoid situation of having configuration conflict or error in the port configuration information, thereby ensuring the accuracy of the generated configuration code.

In step 202, the management platform may generate the configuration code according to the port configuration information and the configuration code generation template. For example, as shown in Table 1, the management platform may determine the port configuration information to be read according to the "Begin" and the "End" identifications shown in Table 1, and further generate the configuration code in conjunction with the configuration code generation template. Alternatively, the management platform may generate the configuration code based on other methods (such as a code auto-generation tool). The present disclosure is not limited to any specific manner.

Further, the configuration code generated by the management platform may be used to be provided to the server to be configured, such that the server to be configured is configured according to the configuration code. As such, during the process of configuring the port of virtual IP, the administrator only needs to provide the port configuration information, the management platform can automatically generate the configuration code, and there is no need for a developer to manually write code, which greatly reduces the workload of the developer.

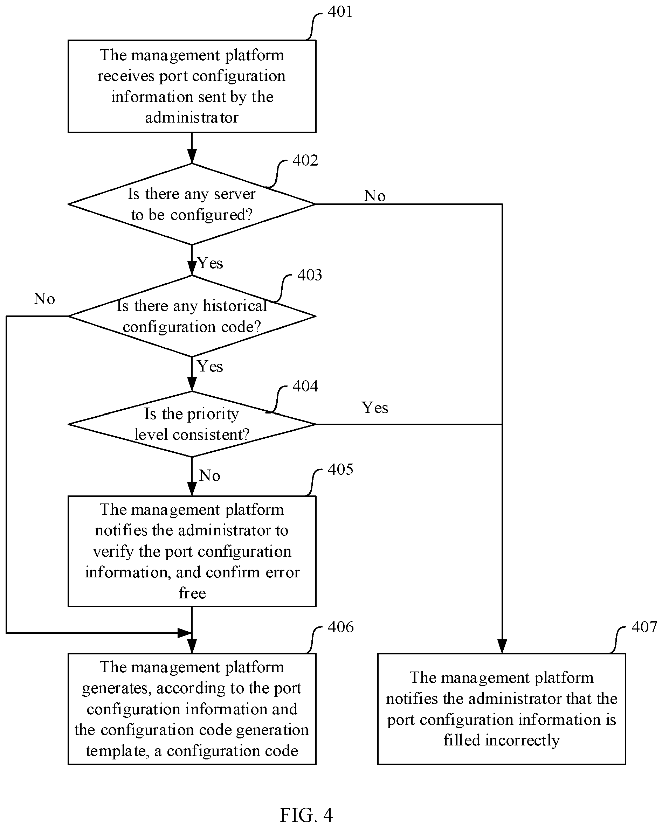

In order to more clearly describe the above method for configuring ports of virtual IP, in the following, a flow involved in the embodiments of the present disclosure will be described in an overall manner with reference to FIG. 4. As shown in FIG. 4, the method may include the following steps.

In step 401, the management platform may receive the port configuration information sent by the administrator.

In step 402, the management platform may determine whether a server to be configured exists, and when such a server to be configured exist, step 403 may be performed; otherwise step 407 may be performed.

In step 403, the management platform may determine whether a historical configuration code corresponding to the server to be configured is stored, and when the historical configuration code corresponding to the server to be configured is stored, step 404 may be performed; otherwise, step 406 may be performed.

In step 404, the management platform may determine whether the priority level of the historical configuration code is the same as the priority level of the attribute information, and when inconsistence is determined, step 405 may be performed; otherwise step 407 may be performed.

In step 405, the management platform may notify the administrator to verify the port configuration information, and after the administrator confirms that there is no error, step 406 may be performed.

In step 406, the management platform may generate, according to the port configuration information and the configuration code generation template, a configuration code.

In step 407, the management platform may notify the administrator that the port configuration information is filled incorrectly.

As such, the management platform may ensure the accuracy and the availability of the generated configuration code, thereby avoiding the situation in which the server is abnormal due to a same service having two or more than two configuration codes with the same priorities. Further, the standardization of filling the port configuration information can be verified, such that the accuracy of the port configuration information can be improved, thereby improving the accuracy of generating the configuration code.

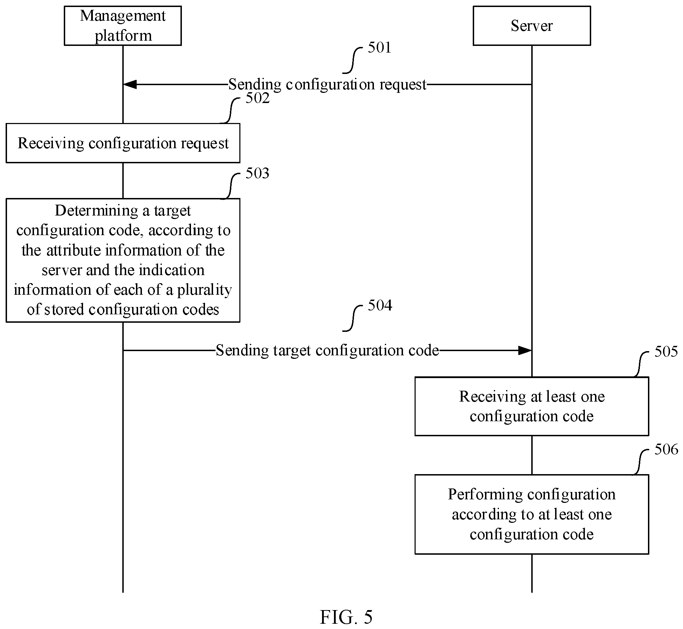

In the embodiments of the present disclosure, after performing the above step 202, the generated configuration code may be provided to the server. Based on this, FIG. 5 illustrates a schematic flowchart of a method for configuring ports of virtual IP on a server side according to an embodiment of the present disclosure. The method may specifically include the following steps.

In step 501, the server may send a configuration request to the management platform.

In step 502, the management platform may receive the configuration request sent by the server.

In step 503, the management platform may determine, according to the attribute information of the server and the indication information of each of a plurality of stored configuration codes, a target configuration code.

In step 504, the management platform may send the target configuration code to the server.

In step 505, the server may receive at least one configuration code sent by the management platform.

In step 506, the server may perform configuration according to the at least one configuration code.

As such, the server may be able to timely obtain the corresponding configuration code from the management platform and perform configuration, thereby improving the timeliness of port configuration.

In the embodiments of the present disclosure, servers may be divided into servers that have been in service and servers that have not been in service. For a server that has been in service, prior to performing the above step 501, when determining that the server to be configured is a server that has been in service, the management platform may send a configuration notification to the server to be configured. As such, after receiving the configuration notification sent by the management platform, the server may perform the above step 501 again. The configuration notification may be used to notify the server to obtain the configuration code from the management platform.

Further, in the embodiments of the present disclosure, considering that for servers that have been in service, there may be a problem that the configuration code is failed to be deployed, the embodiments of the present disclosure may adopt a grayscale deployment method. The management platform may first send a configuration notification to some of the servers that have been in service, and when the deployment of these servers is determined to be successful, the configuration notification may be sent to other servers that have not been in service, such that the complete deployment can be implemented; when the deployment of these servers is determined to be failed, the administrator may be informed that the deployment is failed, such that the administrator can handle this in time.

For servers that have not been in service, when being put into service, the above step 501 can be directly executed. For servers that have not been in service, when being put into service, configuration may be performed according to the configuration code after adding the LVS, which will not be described in detail.

In step 501 and step 502, the configuration request may include the attribute information of the server. The attribute information of the server, as described above, may include the type of the server to be configured, the application service type of the server to be configured, the application service type group of the server to be configured, etc. may further include the type of the server to be configured that is excluded, the application service type of the server to be configured that is excluded, etc., and may also include a priority level, which will not be described in detail here.

In step 503 and step 504, the configuration code may include indication information representing the attribute information. The indication information may be in the form of a text, or may be in the form of a character string, or may be in the form of a number. The present disclosure is not limited to any specific manner.

In the embodiments of the present disclosure, when determining the target configuration code, the determination may be based on the attribute information of the server and the indication information of each of a plurality of stored configuration codes, where the indication information may be used to represent the attribute information of a server to which the configuration code is applicable.

As shown in Table 2, an example of a plurality of stored configuration codes, where the indication information of the configuration code 1 is A, the indication information of the configuration code 2 is B, the indication information of the configuration code 3 is C, and the indication information of the configuration code 4 is C.

**Table 2: an example of a plurality of stored configuration codes**

| Indication Information | Configuration Code |
|---|---|
| A | Configuration code 1 |
| B | Configuration code 2 |
| C | Configuration code 3 |
| C | Configuration code 4 |

Taking the content shown in Table 2 as an example, when the attribute information of the server corresponds to the instruction information A, the target configuration code may be determined as the configuration code 1 shown in Table 2; when the attribute information of the server corresponds to the indication information C, the target configuration code may be determined as the configuration code 3 and configuration code 4 shown in Table 2.

In step 505 and step 506, the server may perform configuration in different ways according to the amount of the received configuration codes. In one embodiment, the server may receive one configuration code, and the configuration may be performed according to the configuration code. In another embodiment, the server may receive multiple configuration codes, and each configuration code may be parsed to obtain the priority information corresponding to each configuration code. Then, the configuration code with the highest priority level may be determined according to the priority information corresponding to each configuration code, such that the configuration may be performed according to the configuration code with the highest priority level.

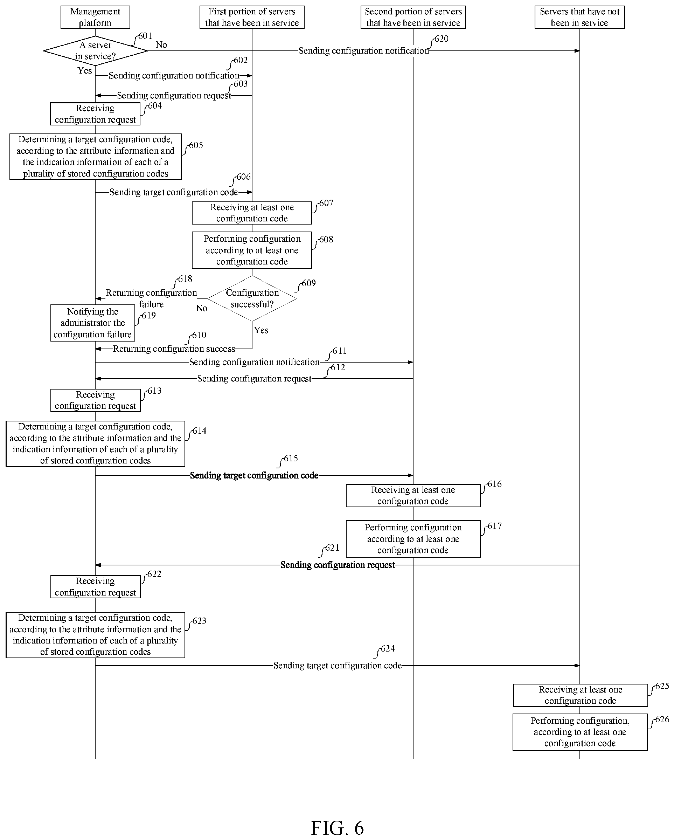

In order to more clearly describe the method for configuring ports of virtual IP on a server side, in the following, a flow involved in the embodiments of the present disclosure will be described in an overall manner with reference to FIG. 6. As shown in FIG. 6, the following steps may be included.

In step 601, the management platform may determine whether the server to be configured is a server that has been in service, and when determining that the server to be configured is a server that has been in service, step 602 may be performed; otherwise, step 620 may be performed.

In step 602, the management platform may send a configuration notification to a first portion of the servers that have been in service.

In step 603, the first portion of the servers that have been in service may send a configuration request to the management platform.

In step 604, the management platform may receive the configuration request sent by the first portion of the servers that have been in service.

In step 605, the management platform may determine, according to the attribute information of the first portion of the servers that have been in service and the indication information of each of the plurality of stored configuration codes, a target configuration code.

In step 606, the management platform may send the target configuration code to the first portion of the servers that have been in service.

In step 607, the first portion of the servers that have been in service may receive at least one configuration code sent by the management platform.

In step 608, the first portion of the servers that have been in service may perform configuration according to the at least one configuration code.

In step 609, the first portion of the servers that have been in service may determine whether the configuration is successful, when the configuration is successful, step 610 may be performed; otherwise step 618 may be performed.

In step 610, the first portion of the servers that have been in service may return configuration success to the management platform.

In step 611, the management platform may send a configuration notification to a second portion of the servers that have been in service.

In step 612, the second portion of the servers that have been in service may send a configuration request to the management platform.

In step 613, the management platform may receive the configuration request sent by the second portion of the servers that have been in service.

In step 614, the management platform may determine, according to the attribute information of the second portion of the servers that have been in service and the indication information of each of the plurality of stored configuration codes, a target configuration code.

In step 615, the management platform may send the target configuration code to the second portion of the servers that have been in service.

In step 616, the second portion of the servers that have been in service may receive at least one configuration code sent by the management platform.

In step 617, the second portion of the servers that have been in service may perform configuration according to the at least one configuration code.

In step 618, the first portion of the servers that have been in service may return configuration failure to the management platform.

In step 619, the management platform may notify the administrator that the configuration is failed.

In step 620, the management platform may send a configuration notification to the servers that have not been in service.

In step 621, the servers that have not been in service may send a configuration request to the management platform.

In step 622, the management platform may receive the configuration request sent by the servers that have not been in service.

In step 623, the management platform may determine, according to the attribute information of the servers that have not been in service and the indication information of each of a plurality of stored configuration codes, a target configuration code.

In step 624, the management platform may send the target configuration code to the servers that have not been in service.

In step 625, the servers that have not been in service may receive at least one configuration code sent by the management platform.

In step 626, the servers that have not been in service may perform configuration according to the at least one configuration code.

It should be noted that the above step number is only an exemplary representation of the execution process, and the sequence of the steps is not specifically limited in the present application. For example, in the above step 602 and step 620, the management platform may send a configuration notification to the servers that have not been in service first, and then send a configuration notification to the first portion of the servers that have been in service. The present disclosure is not limited to any specific manner.

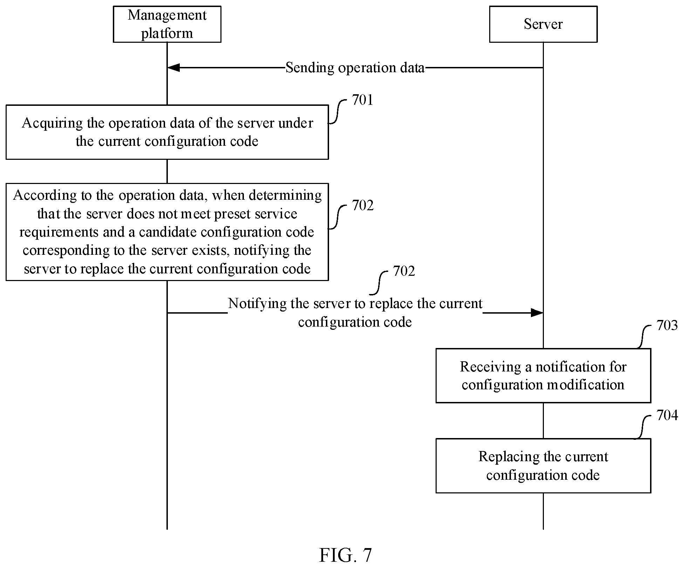

Considering that after the server performs configuration according to the configuration code, the service quality may be poor due to configuration conflict, the embodiments of the present disclosure further provides a quality monitoring method after configuring the server. As shown in FIG. 7, the method may include the following steps.

In step 701, the management platform may acquire the operation data of the server under the current configuration code.

In step 702, the management platform may, according to the operation data, when determining that the server does not meet preset service requirements and a candidate configuration code corresponding to the server exists, notify the server to replace the current configuration code.

In step 703, the server may receive a notification for configuration modification sent by the management platform.

In step 704, the server may replace the current configuration code.

By adopting the method described above, the purpose of monitoring the service quality of the server may be achieved, and the service quality of the server may be ensured. Further, even when the service quality of the server is found to be problematic, the management platform can take corresponding measures in time to optimize the service quality of the server.

Specifically, in step 701 and step 702, the operation data may include content in various formats. For example, the operation data may include the following content:
(1) An amount of requests received within a preset period;
(2) A response speed after receiving a request;
(3) A protocol corresponding to the received request;
(4) A port corresponding to the received request; and
(5) A connection status corresponding to the received request.

It should be noted that the content of the above fie forms is only an exemplary description of the operation data, and those skilled in the art may add or delete the content included in the operation data based on experience and actual conditions. The present disclosure is not limited to any specific manner.

Further, the management platform determining, according to the operation data, whether the server meets the preset service requirements may have multiple ways. In one embodiment, the operation data may include an amount of requests received within a preset period and a response speed after receiving a request, such that the management platform may be able to determine, according to the amount of requests received within the preset period and the response speed of the server after receiving the request, the service quality of the server. Further, the management platform may determine whether the service quality is lower than a preset service quality, and when the service quality is lower than the preset service quality, the server may be determined as not meeting the preset service requirements; otherwise, the server may be determined as meeting the preset service requirements.

In another embodiment, the operation data may include the protocol corresponding to the received request, the port corresponding to the received request, and a connection status corresponding to the received request. Therefore, the management platform may be able to determine that any one of the protocol corresponding to the request received by the server, the port corresponding to the request received by the server, and the connection status corresponding to the request received by the server meets the configuration requirements of the server under the current configuration code, and when incompatibility is determined, the server may be determined as not meeting the preset service requirements; otherwise, the server may be determined as meeting the preset service requirements.

In other possible embodiments, the management platform may determine whether the server meets preset service requirements though other methods. For example, whether the server meets preset service requirements may be determined according to the fault information in the operation data. The present disclosure is not limited to any specific manner.

Further, when determining that the server does not meet the preset service requirements and a candidate configuration code corresponding to the server exists, the management platform may send a notification for configuration modification to the server. The notification for configuration modification may be used to notify the server to replace the current configuration code. When determining that the server does not meet the preset service requirements and there is no candidate configuration code corresponding to the server, the management platform may send a notification for modification to the administrator. The notification for modification may be used to notify the administrator to modify the current configuration code used by the server.

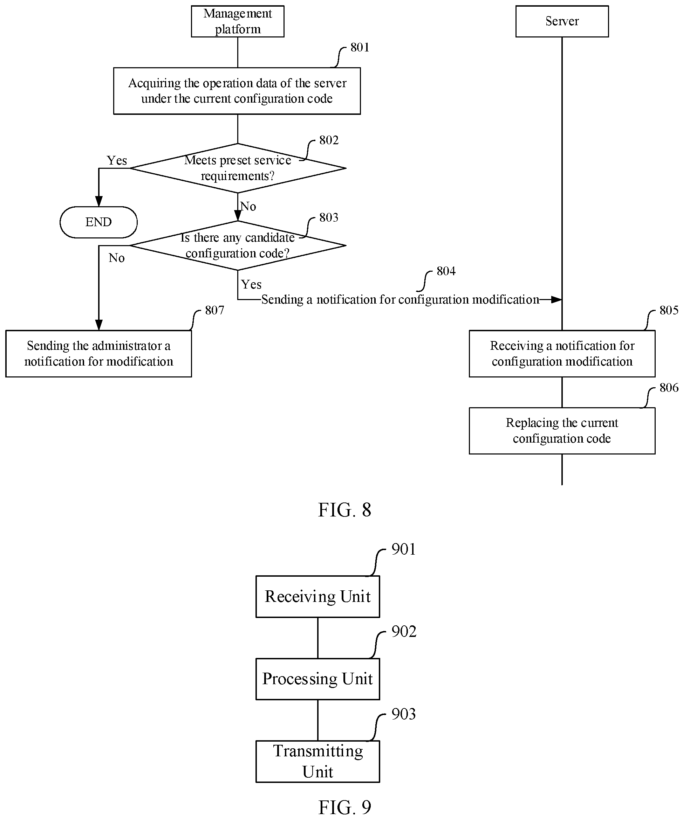

In order to more clearly describe the quality monitoring method after configuring the server is configured, a flow involved in the embodiments of the present disclosure will be described in an overall manner with reference to FIG. 8. As shown in FIG. 8, the following steps may be included.

In step 801, the management platform may acquire the operation data of the server under the current configuration code.

In step 802, the management platform may, according to the operation data, determine whether the server meets preset service requirements, and when the server meets the preset service requirements, the operation may be ended; otherwise, step 803 may be performed.

In step 803, the management platform may determine whether a candidate configuration code corresponding to the server exists, and when the candidate configuration code exist, step 804 may be performed; otherwise, step 807 may be performed.

In step 804, the management platform may send a notification for configuration modification to the server.

In step 805, the server may receive the notification for configuration modification sent by the management platform.

In step 806, the server may replace the current configuration code.

In step 807, the management platform may send a notification for modification to the administrator, such that the administrator may modify the current configuration code used by the server.

Based on the same concept of disclosure, FIG. 9 exemplarily shows a structural diagram of an apparatus for configuring ports of virtual IP according to an embodiment of the present disclosure. As shown in FIG. 9, the apparatus may be a management platform, and the apparatus may include a receiving unit 901, a processing unit 902, and a transmitting unit 903, where:
the receiving unit 901, configured to receive port configuration information, where the port configuration information includes attribute information of the server to be configured and configuration parameters to be configured, and the format of the port configuration information is consistent with a preset configuration code generation template; and
the processing unit 902, configured to generate a configuration code according to the port configuration information and the configuration code generation template, where the configuration code is used to be provided to the server to be configured, such that the server to be configured is configured according to the configuration code.

In a possible implementation manner, the configuration code may include indication information used to represent the attribute information; and
after the processing unit 902 generating the configuration code, the receiving unit 901 may be further configured to:
receive the configuration request sent by the server, where the configuration request may include attribute information of the server; and
the processing unit 902 may also be configured to:
according to the attribute information of the server, and the indication information of each of the plurality of stored configuration codes, determine a target configuration code, where the indication information may be used to represent the attribute information of a server to which the configuration code is applicable;

The apparatus may further include:
a transmitting unit 903, configured to send the target configuration code to the server, such that the server may perform configuration according to the target configuration code.

In a possible implementation manner, prior to generating the configuration code, the processing unit 902 may be further configured to:
determine that the server to be configured exists according to the attribute information.

In a possible implementation manner, after determining that the server to be configured exists according to the attribute information, the processing unit 902 may also be configured to:
determine that a historical configuration code corresponding to the server to be configured is not stored;
or
determine that the priority level of a historical configuration code is not the same as the priority level of the attribute information, where the attribute information includes a priority level.

In a possible implementation manner, after the processing unit 902 generating the configuration code, the apparatus may be further configured to:
when the server to be configured is determined to be a server that has been in service, send a configuration notification to the server to be configured through the transmitting unit, where the configuration notification is used to notify the server to be configured to acquire the configuration code from the management platform.

In a possible implementation manner, the receiving unit 901 may further be used to:
acquire the operation data of the server under the current configuration code; and
the processing unit 902 may be configured to:
according to the operation data, when determining that the server does not meet preset service requirements and a candidate configuration code corresponding to the server exists, notify the server to replace the current configuration code.

In a possible implementation manner, the operation data may include an amount of requests received within a preset period and a response speed after receiving a request; and the processing unit 902 may be specifically configured to:
according to the amount of requests received in the preset period and the response speed after the server receives the request, determine the service quality of the server; and
determining that the service quality is lower than the preset service quality.

In a possible implementation manner, the operation data may include a protocol corresponding to the received request, a port corresponding to the received request, and a connection status corresponding to the received request; and
the processing unit 902 may be specifically configured to:
determine that any one of the protocol corresponding to the request received by the server, the port corresponding to the request received by the server, and the connection status corresponding to the request received by the server does not meet the configuration requirements of the server under the current configuration code.

In a possible implementation manner, the processing unit 902 may be further configured to:
when determining that the candidate configuration code corresponding to the server does not exist, send a notification for modification through the transmitting unit, where the notification for modification is used to notify the server to modify the current configuration code.

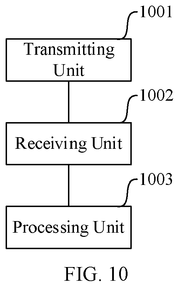

Based on the same concept of disclosure, FIG. 10 exemplarily shows another structural diagram of an apparatus for configuring ports of virtual IP according to an embodiment of the present disclosure. As shown in FIG. 10, the apparatus may be a management platform, and the apparatus may include a transmitting unit 1001, a receiving unit 1002, and a processing unit 1003, where:
the transmitting unit 1001 may be configured to send a configuration request to the management platform, where the configuration request may include the attribute information of the server;
the receiving unit 1002 may be configured to receive at least one configuration code sent by the management platform, where the configuration code may be determined by the management platform according to the attribute information of the server and the indication information of each of a plurality of stored configuration codes, and the indication information may be used to represent the attribute information of the server to which the configuration code is applicable; and
the processing unit 1003 may be configured to perform configuration according to the at least one configuration code.

In a possible implementation manner, the processing unit 1003 may be specifically configured to:
separately parse each configuration code to obtain priority information corresponding to each configuration code; determine a configuration code with the highest priority level according to the priority information corresponding to each configuration code; and perform configuration according to the configuration code with the highest priority level.

In a possible implementation manner, prior to the transmitting unit 1001 sending the configuration request to the management platform, the receiving unit 1002 may be further configured to:
receive a configuration notification sent by the management platform, where the configuration notification may be used to notify the server to acquire the configuration code, and the configuration notification may be sent after determining that the server is a server that has been in service.

In a possible implantation manner, the receiving unit 1002 may be further configured to:
receive a notification for configuration modification sent by the management platform, where the notification for configuration modification may be used to notify the server to replace the current configuration code, and the notification for configuration modification may be sent by the management platform when determining that the server does not meet preset service requirements and a candidate configuration code corresponding to the server exists; and
the process unit 1003 may be further configured to:
   replace the current configuration code.

The embodiments of the present disclosure further provide an apparatus, and the apparatus may have the function of implementing the method for configuring ports of virtual IP described above. The function may be implemented through hardware executing the corresponding software. In a possible design, the apparatus may include: a processor, a transceiver, and a memory. The memory may be used to store computer-executable instructions, the transceiver may be configured to realize communication between the apparatus and other communication entities, and the processor may be coupled to the memory through a bus. When the apparatus is operating, the processor may execute the computer-executable instructions stored by the memory, such that the apparatus can perform the method for configuring ports of virtual IP described above.

The embodiments of the present disclosure further provide a computer storage medium, and the storage medium may store a software program. When the software program is read and executed by one or multiple processors, the method for configuring ports of virtual IP illustrated in the various possible implementations described above can be implemented.

The embodiments of the present disclosure further provide an instruction-containing computer program product, and when the instruction-containing computer program product is executed on a computer, the computer may perform the method for configuring ports of virtual IP illustrated in the various possible implementations described above.

Those skilled in the art should understand that the embodiments of the present disclosure may be provided as a method, a system, or a computer program product. Accordingly, the present disclosure may take the form of a complete hardware embodiment, a complete software embodiment, or an embodiment combining software and hardware aspects. Moreover, the present disclosure may take the form of a computer program product that can be implemented on one or more computer-usable storage media (including but not limited to disk memory, CD-ROM, optical memory, etc.) that contain computer usable program code.

The present disclosure is described with reference to flowcharts and/or block diagrams of the method, apparatus (system), and computer program product according to the embodiments of the present disclosure. It should be understood that each flow and/or block of the flowcharts and/or block diagrams, and the combinations of flows and/or blocks of the flowcharts and/or block diagrams may be implemented by computer program instructions. These computer program instructions can be provided to a processor of a general purpose computer, a special purpose computer, an embedded processor, or other programmable data processing apparatus to generate a machine, such that the instructions executed by the processor of the computer or other programmable data processing apparatus may generate an apparatus that is used to realize one flow or multiple flows of the flowcharts and/or the function specified in one block or multiple blocks of the block diagrams.

These computer program instructions can also be stored in a computer-readable memory that is able to direct a computer or other programmable data processing device to operate in a particular manner, such that the instructions stored in the computer-readable memory produce a product that includes an instruction device. The instruction device may realize one flow or multiple flows of the flowcharts and/or the function specified in one block or multiple blocks of the block diagrams.

These computer program instructions can also be loaded onto a computer or other programmable data processing device such that a series of operational steps are performed on the computer or the other programmable device to produce a computer-implemented process. As such, the instructions that are executable on the computer or the other programmable device are able to provide the steps for realizing one flow or multiple flows of the flowcharts and/or the function specified in one block or multiple blocks of the block diagrams.

Although the preferred embodiments of the present disclosure have been illustrated, those skilled in the art can make additional changes and modifications to these embodiments once they have learned the basic concept of the disclosure. Therefore, the appended claims are intended to be interpreted as including the preferred embodiments as well as all changes and modifications that fall within the scope of the present disclosure.

It is apparent that those skilled in the art can make various modifications and variations to the present disclosure without departing from the spirit and the scope of the present disclosure. As such, when these modifications and variations of the present disclosure fall within the scope of the appended claims and their equivalents, the present disclosure may also be intended to include these modifications and variations.

## Claims

1. A method for configuring ports of virtual IP, comprising:
receiving port configuration information, wherein the port configuration information includes attribute information of a server to be configured and configuration parameters to be configured, and a format of the port configuration information is consistent with a preset configuration code generation template; and
generating a configuration code according to the port configuration information and the configuration code generation template, wherein the configuration code is used to be provided to the server to be configured, such that the server to be configured is configured according to the configuration code.

2. The method according to claim 1, wherein the configuration code includes indication information for representing the attribute information; and after generating the configuration code, the method further includes:
receiving a configuration request sent by the server to be configured, wherein the configuration request includes attribute information of the server;
determining a target configuration code, according to the attribute information of the server and indication information of each of a plurality of stored configuration codes; and
sending the target configuration code to the server, such that the server is configured according to the target configuration code.

3. The method according to claim 1, prior to generating the configuration code, further including one of:
determining that a historical configuration code corresponding to the server to be configured is not stored; and
determining, when the attribute information includes a priority level, that a priority level of a historical configuration code is not same as the priority level of the attribute information.

4. The method according to claim 1, after generating the configuration code, further including:
when the server to be configured is determined to be a server that has been in service, sending a configuration notification to the server to be configured, wherein the configuration notification is used to notify the server to be configured to acquire the configuration code.

5. The method according to claim 1, wherein:
the configuration code generation template includes a server type, a server application service type, a server application service type group, a network protocol, a port number, whether or not persistently connect, a persistent connection time, a client granularity, a scheduling mode, a detection mode, whether or not fallback, a real sever (RS) weight value, and an IP type.

6. The method according to any one of claims 1-5, wherein the method further includes:
acquiring operation data of the server under a current configuration code; and
according to the operation data, when determining that the server does not meet preset service requirements and a candidate configuration code corresponding to the server exists, notifying the server to replace the current configuration code.

7. The method according to claim 6, wherein:
the operation data includes an amount of requests received within a preset period and a response speed after receiving a request; and
according to the operation data, determining that the server does not meet the preset service requirements includes:
determining a service quality of the server according to the amount of requests received in the preset period and the response speed after the server receives the request; and
determining that the service quality is lower than a preset service quality.

8. The method according to claim 6, wherein:
the operation data includes a protocol corresponding to the received request, a port corresponding to the received request, and a connection status corresponding to the received request; and
according to the operation data, determining that the server does not meet the preset service requirements includes:
determining that any one of the protocol corresponding to the request received by the server, the port corresponding to the request received by the server, and the connection status corresponding to the request received by the server does not meet configuration requirements of the server under the current configuration code.

9. The method according to claim 6, further including:
when determining that the candidate configuration code corresponding to the server does not exist, sending a notification for modification, wherein the notification for modification is used to notify the server to modify the current configuration code.

10. A method for configuring ports of virtual IP, applied to a server, the method comprising:
sending a configuration request, wherein the configuration request includes attribute information of the server;
receiving at least one configuration code, wherein the configuration code is determined according to the attribute information of the server and indication information of each of a plurality of stored configuration codes, and the indication information is used to represent the attribute information of a server to which the configuration code is applicable; and
performing configuration according to the at least one configuration code.

11. The method according to claim 10, wherein performing configuration according to the at least one configuration code includes:
parsing each configuration code separately, and obtaining priority information corresponding to each configuration code;
determining a configuration code with a highest priority level according to the priority information corresponding to each configuration code; and
performing configuration according to the configuration code with the highest priority level.

12. The method according to claim 10, prior to sending the configuration request, further including:
receiving a configuration notification, wherein the configuration notification is used to notify the server to acquire the configuration code, and the configuration notification is sent after determining that the server is a server that has been in service.

13. The method according to any one of claims 10-12, wherein the method further includes:
receiving a notification for configuration modification, wherein the notification for configuration modification is used to notify the server to replace a current configuration code, and the notification for configuration modification is sent after determining that the server does not meet preset service requirements and a candidate configuration code corresponding to the server exists; and
replacing the current configuration code.

14. An apparatus for configuring ports of virtual IP, comprising:
a receiving unit, configured to receive port configuration information, wherein the port configuration information includes attribute information of a server to be configured and configuration parameters to be configured, and a format of the port configuration information is consistent with a preset configuration code generation template; and
a processing unit, configured to generate a configuration code according to the port configuration information and the configuration code generation template, wherein the configuration code is used to be provided to the server to be configured, such that the server to be configured is configured according to the configuration code.

15. The apparatus according to claim 14, wherein the configuration code includes indication information for representing the attribute information;
after the processing unit generates a configuration code, the receiving unit is further configured to:
receive a configuration request sent by the server to be configured, wherein the configuration request includes attribute information of the server;
the processing unit is further configured to:
determine a target configuration code according to the attribute information of the server and indication information of each of a plurality of stored configuration codes; and the apparatus further includes:
a transmitting unit, configured to send the target configuration code to the server, such that the server is configured according to the target configuration code.

16. The apparatus according to claim 14, wherein prior to generating the configuration code, the method further includes one of:
determining that a historical configuration code corresponding to the server to be configured is not stored; and
determining, when the attribute information includes a priority level, that a priority level of a historical configuration code is not same as the priority level of the attribute information.

17. The apparatus according to claim 15, wherein after the processing unit generating the configuration code, the processing unit is further configured to:
when the server to be configured is determined to be a server that has been in service, send a configuration notification to the server to be configured through the transmitting unit, wherein the configuration notification is used to notify the server to be configured to acquire the configuration code.

18. The apparatus according to claim 14, wherein:
the configuration code generation template includes a server type, a server application service type, a server application service type group, a network protocol, a port number, whether or not persistently connect, a persistent connection time, a client granularity, a scheduling mode, a detection mode, whether or not fallback, an RS weight value, and an IP type.

19. The apparatus according to any one of claims 14-18, wherein the receiving unit is further configured to:
acquire operation data of the server under a current configuration code; and
the processing unit is further configured to:
according to the operation data, when determining that the server does not meet preset service requirements and a candidate configuration code corresponding to the server exists, notify the server to replace the current configuration code.

20. The apparatus according to claim 19, wherein the operation data includes an amount of requests received within a preset period and a response speed after receiving a request; and
the processing unit is specifically configured to:
determine a service quality of the server according to the amount of requests received in the preset period and the response speed after the server receives the request; and
determine that the service quality is lower than a preset service quality.

21. The apparatus according to claim 19, wherein the operation data includes a protocol corresponding to the received request, a port corresponding to the received request, and a connection status corresponding to the received request; and
the processing unit is specifically configured to:
determine that any one of the protocol corresponding to the request received by the server, the port corresponding to the request received by the server, and the connection status corresponding to the request received by the server does not meet configuration requirements of the server under the current configuration code.

22. The apparatus according to claim 19, wherein processing unit is further configured to:
when determining that the candidate configuration code corresponding to the server does not exist, send a notification for modification through the transmitting unit, wherein the notification for modification is used to notify the server to modify the current configuration code.

23. An apparatus for configuring ports of virtual IP, applied to a server, wherein the apparatus comprises:
a transmitting unit, configured to send a configuration request, wherein the configuration request includes attribute information of the server;
a receiving unit, configured to receive at least one configuration code, wherein the configuration code is determined according to the attribute information of the server and indication information of each of a plurality of stored configuration codes, and the indication information is used to represent attribute information of a server to which the configuration code is applicable; and
a processing unit, configured to perform configuration according to the at least one configuration code.

24. The apparatus according to claim 23, wherein the processing unit is specifically configured to:
parse each configuration code separately, and obtain priority information corresponding to each configuration code; determine a configuration code with a highest priority level according to the priority information corresponding to each configuration code; and perform configuration according to the configuration code with the highest priority level.

25. The apparatus according to claim 23, wherein prior to the transmitting unit sending the configuration request, the receiving unit is further configured to:
receive a configuration notification, wherein the configuration notification is used to notify the server to acquire the configuration code, and the configuration notification is sent after determining that the server is a server that has been in service.

26. The apparatus according to any one of claims 23-25, wherein the receiving unit is further configured to:
receive a notification for configuration modification, wherein the notification for configuration modification is used to notify the server to replace a current configuration code, the notification for configuration modification is sent after determining that the server does not meet the preset service requirements and a candidate configuration code corresponding to the server exists; and
the processing unit is further configured to:
replace the current configuration code.
